# EUROPÄISCHE PATENTSCHRIFT

(11) **EP 2 774 876 B1**
(45) Veröffentlichungstag und Bekanntmachung des Hinweises auf die Patenterteilung: **02.03.2016**
(21) Anmeldenummer: 13157957.5
(22) Anmeldetag: 06.03.2013
(51) Int. Cl.: B65G 47/86, B67C 3/24

(54) **Greifvorrichtung zum Greifen und Halten von Flaschen und Transportvorrichtung mit einer derartigen Greifvorrichtung**
Gripper device for gripping and holding bottles and transport device with such a gripping device
Dispositif de préhension destiné à saisir et à maintenir des bouteilles et dispositif de transport doté d'un tel dispositif de préhension

(43) Veröffentlichungstag der Anmeldung: 10.09.2014
(73) Patentinhaber: Tyrolon-Schulnig GmbH, 6395 Hochfilzen (AT)
(72) Erfinder: Schulnig, Elmar, Ludwig, 6391 Fieberbrunn (AT)
(74) Vertreter: Rupprecht, Kay

(56) Entgegenhaltungen:
- EP-A1- 2 159 172
- EP-A1- 2 343 255
- DE-U1- 20 305 988
- GB-A- 2 264 486

## Beschreibung

Die Erfindung betrifft eine Greifvorrichtung zum Greifen und Halten von Flaschen, Dosen oder dergleichen Flüssigkeitsbehältern gemäß dem Oberbegriff des Patentanspruchs 1. Ferner betrifft die Erfindung eine Transportvorrichtung mit einer derartigen Greifvorrichtung.

Im Allgemeinen sind Greifvorrichtungen für Transportsterne bekannt, die zur Beförderung von Flaschen oder Dosen und ggfs. weiteren Flüssigkeitsbehältern, wie beispielsweise Getränkekartons, geeignet sind. Die Greifeinrichtungen umfassen üblicherweise wenigstens ein Greifarmpaar, das durch ein Betätigungsmittel von einer Freigabestellung in eine Greifstellung überführbar ist. In der Greifstellung greift das Greifarmpaar den Flüssigkeitsbehälter und hält diesen fest. Um ein Kippen des jeweils zu greifenden Behälters zu verhindern, weisen bekannte Greifvorrichtungen meist ein zweites Greifarmpaar auf. Die beiden Greifarmpaare umschließen in der Greifstellung beispielsweise einen Flaschenkörper, d.h. einen unteren Bereich der Flasche. Der Flaschenkörper kann auch als Flaschenbauch bezeichnet werden. Trotzdem die beiden Greifarmpaare ein Kippen der Flasche begrenzen können, besteht weiterhin die Gefahr, dass eine Flasche, insbesondere bei einem Übergabevorgang von einer Greifvorrichtung zu einer weiteren Greifvorrichtung, oberhalb der Greifarme ausgelenkt wird und somit von der zweiten Greifvorrichtung nicht mittig bzw. zentriert greifbar ist. Dies kann zu einer Beschädigung der Greifvorrichtung führen, insbesondere unter dem Aspekt der hohen Geschwindigkeiten von mehreren tausend Übergabevorgängen pro Stunde in einer modernen Flaschenabfüllanlage. Eine bekannte Greifvorrichtung mit zwei Greifarmpaaren ist durch die EP 2 343 255 A1 bekannt.
Aufgabe der Erfindung ist es, eine Greifvorrichtung zum Greifen und Halten von Flaschen anzugeben, die einfach aufgebaut ist und zuverlässig ein Kippen der Flaschen verhindert. Ferner ist es Aufgabe der Erfindung, einen Transportstern mit einer derartigen Greifvorrichtung anzugeben.

Erfindungsgemäß wird diese Aufgabe im Hinblick auf die Greifvorrichtung durch den Gegenstand des Patentanspruchs 1 und im Hinblick auf den Transportstern durch den Gegenstand des Patentanspruchs 8 gelöst.

Die Erfindung beruht auf dem Gedanken, eine Greifvorrichtung zum Greifen und Halten von Flaschen mit zueinander beabstandeten ersten und zweiten Greifarmpaaren zum Greifen und Halten eines Flaschenkörpers anzugeben, wobei die ersten und zweiten Greifarmpaare durch ein gemeinsames Betätigungsmittel von einer Greifstellung in eine Freigabestellung überführbar sind. Erfindungsgemäß ist ein drittes Greifarmpaar zum Greifen und Halten eines Flaschenhalses vorgesehen. Das dritte Greifarmpaar weist zu dem unmittelbar benachbarten, zweiten Greifarmpaar einen Abstand auf, der größer als der Abstand zwischen dem ersten Greifarmpaar und dem zweiten Greifarmpaar ist.

Bei dem Transport von Flaschen, insbesondere bei der Übergabesituation zwischen zwei Greifvorrichtungen, wird durch das dritte Greifarmpaar der Greifvorrichtung effizient vermieden, dass die Flasche ins Kippen gelangt. So wird die Flasche über ihre gesamte Länge, also vom Flaschenkörper bis zum Flaschenhals, zentriert fixiert und kann ohne die Gefahr einer Beschädigung der Greifvorrichtung an eine weitere Greifvorrichtung übergeben werden. Insbesondere wird so ein Kippen von Flaschen effizient vermieden, das gegebenenfalls durch unterschiedliche Befüllungszustände der Flaschen erfolgen kann. Insgesamt wird also der Flaschenhals durch das dritte Greifarmpaar gut gestützt. Der zwischen dem dritten Greifarmpaar und dem zweiten Greifarmpaar bestehende Abstand, der größer als der Abstand zwischen dem ersten und dem zweiten Greifarmpaar ist, ermöglicht eine gute Stabilisierung der Flaschen. Grundsätzlich kann der Flaschenhals im Wesentlichen die gleiche Höhe aufweisen wie der Flaschenkörper bzw. -bauch. Um den Flaschenhals, insbesondere knapp unterhalb des Flaschenverschlusses, greifen zu können, ist das dritte Greifarmpaar vorteilhafterweise weiter vom zweiten Geifarmpaar beabstandet als das erste Greifarmpaar.

Bei der Erfindung kann vorgesehen sein, dass die einzelnen Greifarme der Greifarmpaare unterschiedliche Abstände zueinander in der Greifstellung aufweisen. So kann insbesondere der Abstand zwischen den Greifarmen des dritten Greifarmpaars in der Greifstellung kleiner als zwischen den Greifarmen des ersten und zweiten Greifarmpaars sein. Diese Konfiguration trägt der typischen Form einer Flasche Rechnung, die im Bereich des Flaschenhalses meist schmaler gestaltet ist als im Bereich des Flaschenkörpers.

Konkret ist in einer bevorzugten Ausführungsform der Erfindung vorgesehen, dass der Abstand zwischen einem Greifabschnitt des dritten Greifarmpaares und einem Greifabschnitt des unmittelbar benachbarten zweiten Greifarmpaars um wenigstens das 1,5-fache, insbesondere um wenigstens das 1,75-fache, insbesondere um wenigstens das 2-fache, größer als zwischen Greifabschnitten des ersten und zweiten Greifarmpaars ist.

Grundsätzlich können die Greifarmpaare jeweils einen den Greifabschnitt zugeordneten Betätigungsabschnitt aufweisen. Mit anderen Worten weist jedes Greifarmpaar einen Greifabschnitt und einen Betätigungsabschnitt auf. Insbesondere weist jeder Greifarm der Greifarmpaare einen Greifabschnitt und einen Betätigungsabschnitt auf. Der Betätigungsabschnitt wirkt vorzugsweise mit dem gemeinsamen Betätigungsmittel zusammen, um das jeweilige Greifarmpaar von der Greifstellung die Freigabestellung zu überführen.

Das gemeinsame Betätigungsmittel umfasst vorzugsweise eine Nockenwelle. Die Betätigungsabschnitte der einzelnen Greifarmpaare wirken also vorzugsweise mit der Nockenwelle derart zusammen, dass die Greifarmpaare, insbesondere zeitlich versetzt zueinander oder simultan, von der Greifstellung in die Freigabestellung überführbar sind. Die Nockenwelle kann mindestens einen Nocken aufweisen. Der Nocken bewirkt bei einer Rotation der Nockenwelle, dass die Betätigungsabschnitte der Greifarme auseinandergedrängt werden. Der Nocken kann eine Höhe bzw. Länge aufweisen, so dass der einzige Nocken alle Greifarmpaare von einer Greifstellung in eine Freigabestellung überführt. Alternativ können zwei, insbesondere drei, Nocken vorgesehen sein, wobei jeweils ein Nocken einem einzigen Greifarmpaar zugeordnet ist. Die Nocken können winkelversetzt zueinander angeordnet sein, um eine zeitlich verstetzte Betätigung der Greifarmpaare zu ermöglichen.

In einer vorteilhaften Ausgestaltung der Erfindung sind die Greifabschnitte parallel versetzt zum jeweils zugeordneten Betätigungsabschnitt angeordnet. Dabei kann ein Parallelabstand zwischen dem Greifabschnitt und dem Betätigungsabschnitt des dritten Greifarmpaars größer sein als ein Parallelabstand zwischen dem Greifabschnitt und dem Betätigungsabschnitt des ersten oder zweiten Greifarmpaars. Vorzugsweise ist der Parallelabstand zwischen dem Greifabschnitt und dem Betätigungsabschnitt des ersten Greifarmpaars identisch zu dem Parallelabstand zwischen dem Greifabschnitt und dem Betätigungsabschnitt des zweiten Greifarmpaares. Lediglich der Parallelabstand zwischen dem Greifabschnitt und dem Betätigungsabschnitt des dritten Greifarmpaars ist größer als der am ersten und zweiten Greifarmpaar erkennbare Parallelabstand.

Der unterschiedliche Parallelabstand zwischen den Greifabschnitten und den jeweils zugeordneten Betätigungsabschnitten kann insbesondere dadurch erreicht werden, dass zwischen dem Greifabschnitt und dem Betätigungsabschnitt jeweils ein Winkelversatzstück angeordnet ist, wobei das Winkelversatzstück des dritten Greifarmpaars länger als das Winkelversatzstück einer der anderen Greifarmpaare ist. Grundsätzlich kann ausschließlich das dritte Greifarmpaar ein Winkelversatzstück aufweisen. Das erste und zweite Greifarmpaar kann ohne Winkelversatzstück ausgebildet sein, so dass der Greifabschnitt mit dem jeweils zugeordneten Betätigungsabschnitt fluchtet.

Durch das Winkelversatzstück wird erreicht, dass trotz eines gleichen Abstandes zwischen den einzelnen Greifarmpaaren im Bereich ihrer Betätigungsabschnitte ein unterschiedlicher Abstand zwischen den Greifabschnitten der Greifarmpaare ausgebildet ist. So kann insgesamt Bauraum eingespart werden, da sich die Länge des Betätigungsmittels, insbesondere der Nockenwelle, ausschließlich nach dem Abstand der Betätigungsabschnitte zueinander richtet. Der Greifabschnitt des dritten Greifarmpaars kann, durch Einsatz eines entsprechenden Winkelversatzstückes, die Nockenwelle im Bereich der Betätigungsabschnitte überragen.

Vorzugsweise weisen die Betätigungsabschnitte der Greifarmpaare jeweils denselben Abstand zueinander auf. Die einzelnen Greifarmpaare umfassen also jeweils einen Betätigungsabschnitt, wobei die Betätigungsabschnitte unmittelbar benachbarter Greifarmpaare zueinander beabstandet sind. Der Abstand zwischen zwei Betätigungsabschnitten benachbarter Greifarmpaare ist sowohl zwischen dem ersten und zweiten Greifarmpaar, als auch zwischen dem zweiten und dritten Greifarmpaar vorzugsweise gleich. Im Bereich der Betätigungsabschnitte weisen also die Greifarmpaare der Greifvorrichtung in bevorzugten Ausführungsformen gleiche Abstände zueinander auf.

Gemäß einem nebengeordneten Aspekt beruht die Erfindung auf dem Gedanken, eine Transportvorrichtung für Flaschen, Dosen oder dergleichen Flüssigkeitsbehältern mit einer Zufuhr beschriebenen Greifvorrichtung anzugeben. Die Transportvorrichtung kann insbesondere ein rotierbarer Transportstern sein.

Die Erfindung wird im Folgenden anhand von Ausführungsbeispielen unter Bezugnahme auf die beigefügten, schematischen Zeichnungen näher erläutert. Darin zeigen
- Figur 1:: eine Seitenansicht der erfindungsgemäßen Greifvorrichtung nach einem bevorzugten Ausführungsbeispiel;
- Figur 2:: eine vorderer perspektivische Ansicht der Greifvorrichtung gemäß Figur 1; und
- Figur 3:: eine hintere perspektivische Ansicht der Greifvorrichtung gemäß Figur 1.

Die Figuren zeigen insgesamt eine Greifvorrichtung, die zum Greifen und Halten von Flaschen geeignet ist. Der nachfolgend beschriebene Grundaufbau bzw. das Grundfunktionsprinzip ist für alle Ausführungsformen der Erfindung anwendbar und insbesondere für alle Anwendungsbereiche beim Transport von Flaschen nutzbar. Für das Greifen und Halten unterschiedlich gestalteter Flaschen ist es ausreichend, lediglich entsprechende Greifarmpaare 11, 12, 13 vorzusehen bzw. die Abstände zwischen Greifabschnitten 17 der Greifarmpaare anzupassen. Vorzugsweise sind die Greifarme 14 der Greifarmpaare 11, 12, 13 zumindest abschnittsweise an die Form des zu transportierenden Flüssigkeitsbehälters angepasst.

Die Greifvorrichtung 10 weist bei dem dargestellten Ausführungsbeispiel drei Greifarmpaare 11, 12, 13 auf. Eine höhere Anzahl von Greifarmpaaren 11, 12, 13 ist möglich. Beispielsweise kann die Greifvorrichtung 10 vier Greifarmpaare 11, 12, 13 aufweisen.

Die Greifarmpaare 11, 12, 13 weisen grundsätzlich jeweils zwei Greifarme 14 auf, die im Wesentlichen komplementär zueinander ausgebildet sind. Die Greifarme 14 sind in einen Greifabschnitt 17 und einen Betätigungsabschnitt 18 unterteilt. Die Betätigungsabschnitte 18 der Greifarme 14 können im Wesentlichen identisch ausgebildet sein. Somit bildet der Betätigungsabschnitt 18 ein Standardbauteil, das eine günstige Serienfertigung erlaubt.

Bei dem dargestellten Ausführungsbeispiel sind ein erstes bzw. unteres Greifarmpaar 13 und ein zweites bzw. mittleres Greifarmpaar 12 identisch ausgebildet. Ein drittes bzw. oberes Greifarmpaar 11 weicht in seiner Form von dem mittleren Greifarmpaar 12 und dem unteren Greifarmpaar 13 ab. Das untere Greifarmpaar 13 und das mittlere Greifarmpaar 12 weisen zudem identische Greifabschnitte 17 auf. Der Greifabschnitt 17 des oberen Greifarmpaars 11 weist gegenüber dem Greifabschnitt 17 des mittleren Greifarmpaars 12 und des unteren Greifarmpaars 13 eine andersartige Form auf. Insbesondere umfasst der Greifabschnitt 17 des oberen Greifarmpaars 11 ein Winkelversatzstück 15, so dass der Abstand zwischen dem Greifabschnitt 17 des oberen Greifarmpaars 11 und des mittleren Greifarmpaars 12 größer als der Abstand zwischen den Greifabschnitten 17 des mittleren Greifarmpaars 12 und des unteren Greifarmpaars 13 ist. Der Greifabschnitt 17 des oberen Greifarmpaars 11 dient vorzugsweise zum Halten eines Flaschenhalses bzw. einer oberen Hälfte einer Flasche, wogegen die unteren und mittleren Greifarmpaare 12, 13 den Flaschenkörper halten.

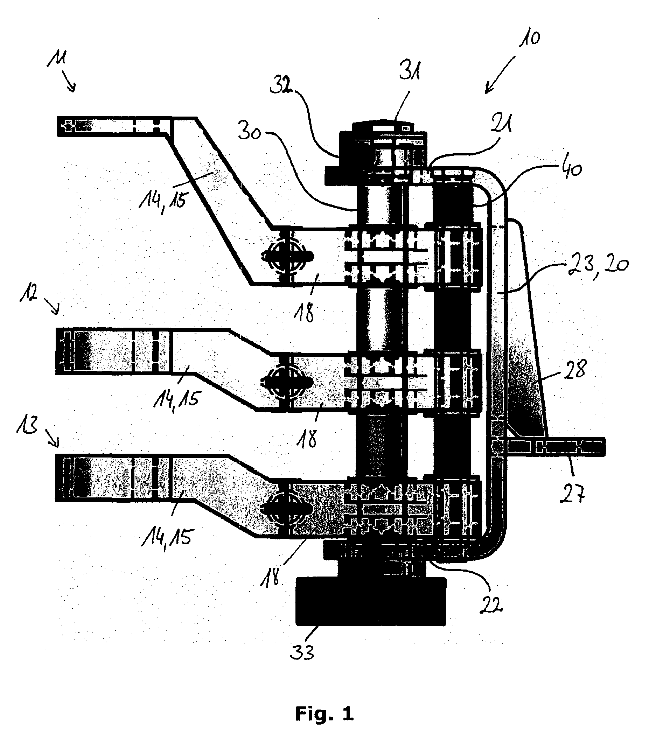

Wie bereits erläutert, ist es zweckmäßig, wenn der Betätigungsabschnitt 18 ein Standardbauteil bildet. Folglich kann vorgesehen sein, dass der Greifabschnitt 17 mit dem Winkelversatzstück 15 ein einstückiges Bauteil eines Greifarms 14 bildet. Das einstückige Bauelement bestehend aus dem Greifabschnitt 17 und dem Winkelversatzstück 15 kann beispielsweise aus Kunststoff, insbesondere Polyetheretherketon (PEEK) gebildet sein. Insbesondere kann faserverstärktes, beispielsweise glasfaserverstärktes oder kohlefaserverstärktes, PEEK zum Einsatz gelangen. Alternativ ist es auch möglich, das einteilige Bauteil aus Greifabschnitt 17 und Winkelversatzstück 15 aus Metall zu bilden. Bei dem in den Figuren dargestellten Ausführungsbeispiel weisen alle Greifarmpaare 11, 12, 13 jeweils Greifarme 14 auf, die ein Winkelversatzstück 15 umfassen. Das Winkelversatzstück 15 ist jeweils einteilig mit dem zugeordneten Greifabschnitt 17 ausgebildet. Es ist jedoch auch denkbar, dass zumindest das untere Greifarmpaar 13 und/oder das mittlere Greifarmpaar 12 aus sich gerade erstreckenden Greifarmen 14 gebildet sind. Mit anderen Worten weist das untere Greifarmpaar 13 und/oder das mittlere Greifarmpaar 12 kein Winkelversatzstück 15 auf. Vielmehr kann der Greifabschnitt 17 fluchtend, insbesondere horizontal geradlinig, in den jeweils zugeordneten Betätigungsabschnitt 18 übergehen. Wesentlich für die Erfindung ist es, dass der Greifabschnitt 17 des oberen Greifarmpaares 11 zum unmittelbar benachbarten Greifabschnitt 17 des mittleren Greifarmpaars 12 einen größeren Abstand aufweist als der Greifabschnitt 17 des mittleren Greifarmpaars 12 zum Greifabschnitt 17 des unteren Greifarmpaars 13. Vorzugsweise ist das Winkelversatzstück 15 des oberen Greifarmpaars 11, wie in Fig. 1 gut erkennbar ist, derart lang und steil ausgebildet, dass der Greifabschnitt 17 des oberen Greifarmpaars 11 den oberen Lagerflansch 21 überragt. Insgesamt ergibt sich so der Vorteil, dass das Grundelement 20 insgesamt kompakt gestaltet sein kann, obgleich durch die Anordnung der Greifabschnitte 17 vergleichsweise große Flaschen sicher gegriffen werden können. Zur Material- und Gewichtsersparnis kann überdies vorgesehen sein, dass der Greifabschnitt 17 des oberen Greifarmpaars 11 schmaler bzw. dünner ausgebildet ist als der Greifabschnitt 17 des mittleren und/oder unteren Greifabschnitts 12, 13. Das obere Greifarmpaar 11 dient, vorzugsweise ausschließlich, zur seitlichen Stabilisierung und zur Zentrierung einer Flasche, insbesondere des Flaschenhalses. Die Greif- und Haltekraft wird hauptsächlich durch die weiteren Greifarmpaare 12, 13, insbesondere das mittlere Greifarmpaar 12 und das untere Greifarmpaar 13, aufgebracht.

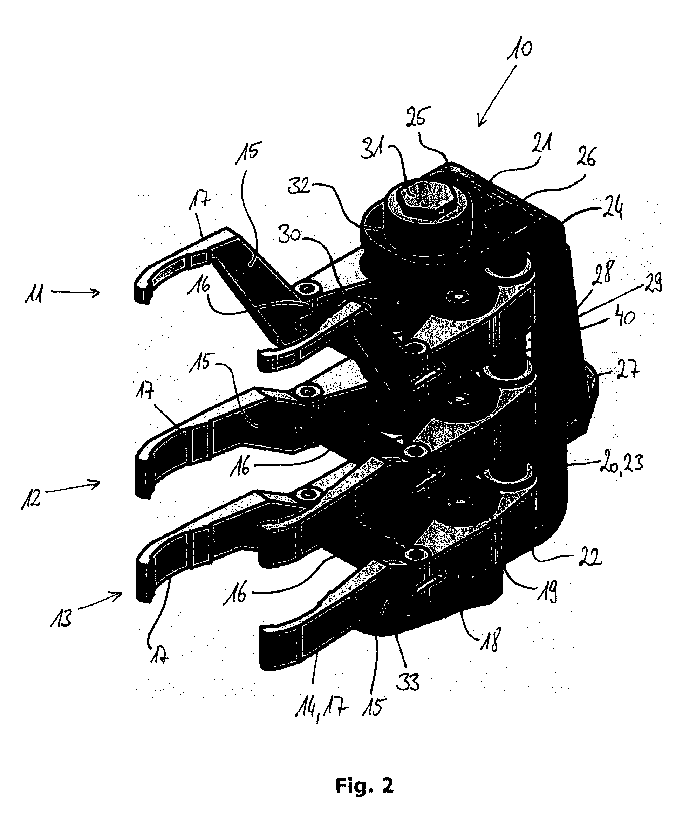

Wie in Fig. 2 gut erkennbar ist, erstreckt sich zwischen den Greifarmen 14 eines Greifarmpaars 11, 12, 13 jeweils eine Zugfeder 16. Die Zugfeder 16 bzw. ein Ende der Zugfeder 16 ist insbesondere im Übergang zwischen dem Greifabschnitt 17 und dem Betätigungsabschnitt 18 angeordnet. Da der Greifabschnitt 17 und der Betätigungsabschnitt 18 separate Bauteile darstellen, die miteinander verbunden sind, ist die Anordnung der Zugfeder 16 im Übergang zwischen Greifabschnitt 17 und dem Betätigungsabschnitt 18 besonders einfach möglich.

Die Greifarme 14 der Greifvorrichtung 10 sind gelenkig in einem Grundelement 20 gelagert. Dazu sind in dem Grundelement 20 zwei Haltestangen 40 angeordnet, die jeweils eine Drehachse für einen Greifarm 14 bilden. Die Haltestange 40 kann drehfest in dem Grundelement 20 angeordnet sein. In diesem Fall ist vorgesehen, dass die Greifarme 14 an der Haltestange 40 drehgelagert sind. Alternativ ist es möglich, dass die Greifarme 14 jeweils mit einer Haltestange 40 drehfest verbunden sind und die Haltestange 40 in den Grundelementen 20 drehbar gelagert sind. In jedem Fall ist die Haltestange 40 drehfest oder drehbar mit dem Betätigungsabschnitt 18 des Greifarms 14 verbunden.

Zwischen der Haltestange 40 und dem Greifabschnitt 17 umfasst der Betätigungsabschnitt 18 jeweils eine Führungsrolle 19. Die Führungsrollen 19 der Greifarme 14 eines Greifarmpaars 11, 12, 13 sind auf einer einander zugewandten Seite des Betätigungsabschnitts 18 angeordnet. Mit anderen Worten sind die Führungsrollen 19 zueinander gerichtet. Die Rotationsachse der Führungsrollen 19 erstreckt sich parallel zu den Drehachsen der Greifarme 14. Bei dem dargestellten Ausführungsbeispiel sind jeweils zwei Führungsrollen 19 vorgesehen, die an einem Greifarm 14 drehgelenkig gelagert sind. So wird eine Verwindung der Greifarme 14 bei der Betätigung vermieden.

Die Führungsrollen 19 wirken mit Nocken einer Nockenwelle 30 zusammen, die drehbar im Grundelement 20 gelagert ist. Die Nockenwelle 30 erstreckt sich mittig zwischen den Greifarmen 14 der Greifarmpaare 11, 12, 13. Die Nockenwelle 30 weist eine Rotationsachse auf, die parallel zur Drehachse der Greifarme 14 ausgerichtet ist. Mit anderen Worten erstreckt sich die Nockenwelle 30 parallel zu den Haltestangen 40. Die Nockenwelle 30 ist sowohl zwischen den Greifarmen 14, 15, als auch zwischen den Haltestangen 40 und der Zugfeder 16 angeordnet.

Die Nockenwelle 30 bildet ein Betätigungsmittel für die Greifarmpaare 11, 12, 13. Dazu ist die Nockenwelle 30 drehbar im Grundelement 20 gelagert. Das Grundelement 20 ist durch ein Blechteil gebildet. Die Verwendung eines Blechteils ermöglicht einen gewichtsoptimierten und einfach herzustellenden Aufbau der Greifvorrichtung 10. Das Blechteil bzw. Grundelement 20 ist plattenartig aufgebaut und im Bereich der Endabschnitte umgebogen, so dass zwei parallel zueinander angeordnete Lagerflansche 21, 22 gebildet sind. Grundsätzlich weist das Grundelement 20 ein U-förmiges Profil auf, wobei die Schenkel des Profils durch die Lagerflansche 21, 22 und der Boden des Profils durch einen Steg 23 gebildet sind. Der Steg 23 verbindet einen oberen Lagerflansch 21 mit einem unteren Lagerflansch 22. Der obere Lagerflansch 21, der untere Lagerflansch 22 und der Steg 23 sind einteilig bzw. einstückig ausgebildet. Konkret sind die Lagerflansche 21, 22 bei der Herstellung durch Umformen der Endabschnitte des Grundelements 20 gebildet. Dabei werden die Endabschnitte entlang jeweils einer Biegelinie umgebogen, so dass sich das U-förmige Profil des Blechteils ergibt.

Die Verwendung eines Blechteils als Grundelement 20 hat den besonderen Vorteil, dass auf diese Weise das Grundelement 20 an unterschiedliche Anforderungen bzw. Kundenwünsche hinsichtlich der Gestaltung der Greifvorrichtung anpassbar ist. So können einfach unterschiedliche Abstände zwischen dem oberen Lagerflansch 21 und dem unteren Lagerflansch 22 eingestellt werden. Dies ist beispielsweise sinnvoll, wenn eine andere Anzahl von Greifarmpaaren 11, 12, 13 vorgesehen ist.

Die Lagerflansche 21, 22 weisen jeweils zwei Aufnahmebohrungen 25, 26 auf. Die Aufnahmebohrungen 25, 26 nehmen die Haltestangen 40 auf. Dabei können die Aufnahmebohrungen 25, 26 als Lager für die Drehlagerung der Haltestangen 40 ausgebildet sein. Bevorzugt ist es, wenn die Haltestangen 40 fest, insbesondere drehfest, in den Aufnahmebohrungen 25, 26 angeordnet sind. Beispielsweise können die Haltestangen 40 in die Aufnahmebohrungen 25, 26 eingepresst sein. Die für die Bewegung der Greifarmpaare 11, 12, 13 erforderliche Drehlagerung besteht dann zwischen den Greifarmen 14 und den Haltestangen 40.

Ferner weisen die Lagerflansche 21, 22 jeweils eine Lagerbohrung 24 auf. Die Lagerbohrungen 24 nehmen die Nockenwelle 30 auf, die sich zwischen den Lagerflanschen 21, 22 erstreckt. Im Bereich der Lagerbohrung 24 können der obere Lagerflansch 21 und/oder der untere Lagerflansch 22 eine Lagerhülse 32 aufweisen. Die Lagerhülse 32 kann mit dem Lagerflansch 21, 22 fest verbunden, insbesondere verschweißt oder verpresst sein. Die Lagerhülse 32 ist vorzugsweise auf einer Außenseite des Lagerflanschs 21, 22 angeordnet.

Am axialen Ende der Nockenwelle 30 ist zumindest im Bereich des oberen Lagerflanschs 21, vorzugsweise auch im Bereich des unteren Lagerflanschs 22, eine Lagerschraube 31 vorgesehen. Die Lagerschraube 31 ist koaxial zur Nockenwelle 30 ausgerichtet. Mit Hilfe der Lagerschraube 31 ist die Nockenwelle 30 fixiert, wobei eine Rotationsbewegung weiterhin möglich ist.

Bei dem Ausführungsbeispiel gemäß Figuren 1-3 ist am oberen Ende der Nockenwelle 30 die Lagerschraube 31 angeordnet. Am unteren Ende der Nockenwelle 30 ist ein Betätigungshebel 33 erkennbar. Der Betätigungshebel 33 ist dazu geeignet, mit einem entsprechenden Bolzen eines Transportsterns zusammenzuwirken, so dass die Nockenwelle 30 drehbar ist. Durch Drehung der Nockenwelle 30 wird mittels der Nocken eine Kraft auf die Greifarme 14 der Greifarmpaare 11, 12, 13 ausgeübt. Diese Kraft wirkt entgegen der Zugkraft der Zugfeder 16, so dass die Greifarme 14 auseinander gedrückt werden. In der auseinander gedrückten Stellung sind die Greifarmpaare 11, 12, 13 geöffnet. Dies entspricht der Freigabestellung der Greifarmpaare 11, 12, 13. Sobald die Nockenwelle um etwa 90° gedreht ist, lässt die die Greifarme 14 nach außen drängende Kraft nach, so dass die Zugkraft der Zugfeder 16 überwiegt. Folglich werden die Greifarme 14 zueinander gezogen. Mit anderen Worten werden die Greifarmpaare 11, 12, 13 geschlossen. Dies entspricht der Greifstellung der Greifarmpaare 11, 12, 13.

Die Verbindung der Greifvorrichtung 10 mit einem Transportstern erfolgt bei dem Ausführungsbeispiel gemäß den beigefügten Figuren durch einen Befestigungsflansch 27, der mit dem Grundelement 20 fest verbunden ist. Der Befestigungsflansch 27 erstreckt sich parallel zu den Lagerflanschen 21, 22 und ist an einer Rückseite des Stegs 23 angebracht. Vorzugsweise ist der Befestigungsflansch 27 mit dem Steg 23 fest verbunden, insbesondere pressverbunden. Es ist auch möglich, dass der Befestigungsflansch 27 mit dem Steg 23 stoffschlüssig verbunden ist, beispielsweise geschweißt. Der Befestigungsflansch 27 umfasst eine Öffnung 41, in die ein Bolzen eines Transportsterns eingreifen kann. So ist eine formschlüssige Verbindung zwischen der Greifvorrichtung 10 und dem Transportstern gewährleistet.

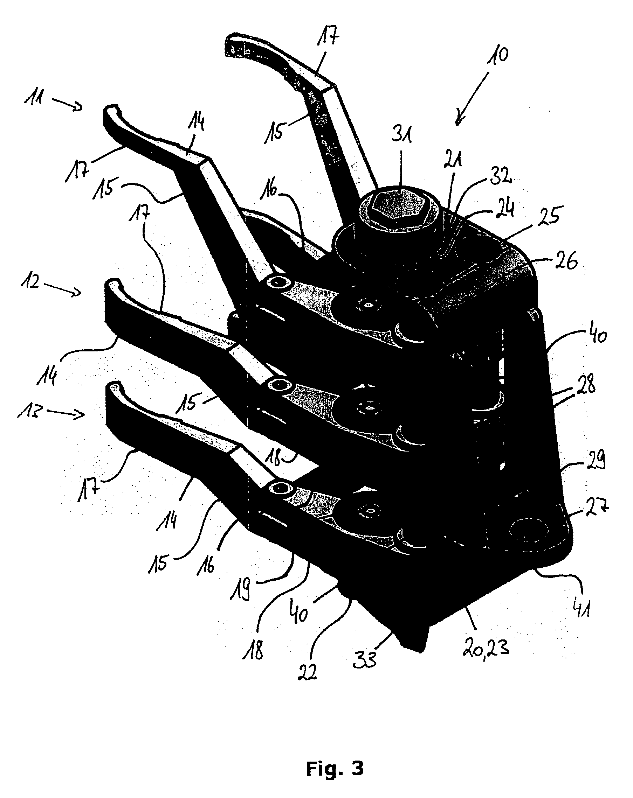

In Fig. 3 ist deutlich erkennbar, dass der Befestigungsflansch 27 durch Versteifungsrippen 28 abgestützt ist. Die Versteifungsrippen 28 sind mit dem Befestigungsflansch 27 und dem Steg 23 des Grundelements 20 verbunden. Die Verbindung kann durch Schweißen oder durch eine Pressverbindung erfolgen. Die Versteifungsrippen 28 sind jeweils zum Steg 23 und zum Befestigungsflansch 27 rechtwinklig ausgerichtet.

Zwischen den Versteifungsrippen 28 erstreckt sich im Steg 23 eine Ausnehmung 29. Die Ausnehmung 29 ist fensterartig ausgebildet bzw. weist im Wesentlichen ein rechteckiges Profil mit abgerundeten Kanten auf. Die Ausnehmung 29 dient im Wesentlichen der Gewichtsreduktion. Es hat sich gezeigt, dass im Bereich zwischen den Versteifungsrippen 28 kaum Kräfte auf den Steg 23 wirken, so dass in diesem Bereich eine Materialeinsparung ohne signifikante Stabilitätseinbußen möglich ist. Zusätzlich erleichtert die Ausnehmung 29 den Zugang zu den Haltestangen 40 und der Nockenwelle 30, so dass das Innenleben der Greifvorrichtung 10 gut zu reinigen ist. So weist die Greifvorrichtung 10 gute hygienische Eigenschaften auf, was insbesondere für die pharmazeutische Industrie von Belang ist.

In Fig. 3 ist außerdem andeutungsweise erkennbar, dass die Greifarme 14, 15 im Bereich der Haltestangen 40 ein ineinandergreifendes Zahnprofil aufweisen. Die ineinander greifenden Zähne der Greifarme 14 stellen sicher, dass die Greifarme 14 paarweise betätigbar sind. Das bedeutet, dass auch bei möglicherweise einseitiger Abnutzung der Nocken der Nockenwelle gewährleistet ist, dass beide Greifarme 14 simultan betätigbar sind. Alternativ ist auch denkbar, dass die Greifarme unabhängig oder zumindest zeitlich versetzt zueinander betätigbar sind.

### Bezugszeichenliste

- 10: Greifvorrichtung
- 11: oberes Greifarmpaar
- 12: mittleres Greifarmpaar
- 13: unteres Greifarmpaar
- 14: Greifarm
- 15: Winkelversatzstück
- 16: Zugfeder
- 17: Greifabschnitt
- 18: Betätigungsabschnitt
- 19: Führungsrolle
- 20: Grundelement
- 21: oberer Lagerflansch
- 22: unterer Lagerflansch
- 23: Steg
- 24: Lagerbohrung
- 25, 26: Aufnahmebohrung
- 27: Befestigungsflansch
- 28: Versteifungsrippe
- 29: Ausnehmung
- 30: Nockenwelle
- 31: Lagerschraube
- 32: Lagerhülse
- 33: Betätigungshebel
- 40: Haltestange
- 41: Öffnung

## Patentansprüche

1. Greifvorrichtung (10) zum Greifen und Halten von Flaschen, mit zwei zueinander beabstandeten ersten und zweiten Greifarmpaaren (12, 13) zum Greifen und Halten eines Flaschenkörpers, wobei die ersten und zweiten Greifarmpaare (12, 13) durch ein gemeinsames Betätigungsmittel von einer Greifstellung in eine Freigabestellung überführbar sind,
**gekennzeichnet durch**
ein drittes, **durch** das gemeinsame Betätigungsmittel bewegbares Greifarmpaar (11) zum Greifen und Halten eines Flaschenhalses, wobei ein Greifabschnitt des dritten Greifarmpaars (11) zu einem Greifabschnitt des unmittelbar benachbarten, zweiten Greifarmpaars (12) einen Abstand aufweist, der größer als der Abstand zwischen einem Greifabschnitt des ersten Greifarmpaars (13) und dem Greifabschnitt des zweiten Greifarmpaars (12) ist.

2. Greifvorrichtung (10) nach Anspruch 1,
**dadurch gekennzeichnet, dass**
der Abstand zwischen dem Greifabschnitt (17) des dritten Greifarmpaars (11) und dem Greifabschnitt (17) des unmittelbar benachbarten zweiten Greifarmpaars (12) um wenigstens das 1,5-fache, insbesondere um wenigstens das 1,75-fache, insbesondere um wenigstens das 2-fache, größer als zwischen Greifabschnitten (17) des ersten und zweiten Greifarmpaars (12, 13) ist.

3. Greifvorrichtung (10) nach Anspruch 1 oder 2,
**dadurch gekennzeichnet, dass**
die Greifarmpaare (11, 12, 13) jeweils einen dem Greifabschnitt (17) zugeordneten Betätigungsabschnitt (18) aufweisen.

4. Greifvorrichtung (10) nach Anspruch 3,
**dadurch gekennzeichnet, dass**
der Betätigungsabschnitte (18) der einzelnen Greifarmpaare (11, 12, 13) mit dem gemeinsamen Betätigungsmittel, insbesondere einer Nockenwelle (30), zusammenwirken derart, dass die Greifarmpaare (11, 12, 13), insbesondere zeitlich versetzt zueinander oder simultan, von der Greifstellung in die Offenstellung überführbar sind.

5. Greifvorrichtung (10) nach Anspruch 3 oder 4,
**dadurch gekennzeichnet, dass**
die Betätigungsabschnitte (18) der Greifarmpaare (11, 12, 13) jeweils denselben Abstand zueinander aufweisen.

6. Greifvorrichtung (10) nach einem der Anspüche 3 bis 5,
**dadurch gekennzeichnet, dass**
die Greifabschnitte (17) parallel versetzt zum jeweils zugeordneten Betätigungsabschnitt (18) angeordnet sind, wobei ein Parallelabstand zwischen dem Greifabschnitt (17) und dem Betätigungsabschnitt (18) des dritten Greifarmpaars (11) größer als zwischen dem Greifabschnitt (17) und dem Betätigungsabschnitt (18) des ersten oder zweiten Greifarmpaars (12, 13) ist.

7. Greifvorrichtung (10) nach einem der Anspüche 3 bis 6,
**dadurch gekennzeichnet, dass**
zwischen dem Greifabschnitt (17) und dem Betätigungsabschnitt (18) ein Winkelversatzstück (15) angeordnet ist, wobei das Winkelversatzstück (15) des dritten Greifarmpaars (11) länger als das Winkelversatzstück (15) einer der anderen Greifarmpaare (12, 13) ist.

8. Transportvorrichtung für Flaschen, Dosen oder dergleichen Flüssigkeitsbehälter mit einer Greifvorrichtung (10) nach einem der vorhergehenden Ansprüche.

## Claims

1. A gripper device (10) for gripping and holding bottles comprising two first and second gripper arm pairs (12, 13) spaced apart from each another for gripping and holding the body of a bottle, wherein the first and second gripper arm pairs (12, 13) can be brought from a gripping position into a releasing position by a common actuating means,
**characterized by**
a third gripper arm pair (11) movable by the common actuating means for gripping and holding the neck of a bottle, wherein a gripping section of the third gripper arm pair (11) is at a greater distance to a gripping section of the directly adjacent second gripper arm pair (12) than the distance between a gripping section of the first gripper arm pair (13) and the gripping section of the second gripper arm pair (12).

2. The gripper device (10) according to claim 1,
**characterized in that**
the distance between the gripping section (17) of the third gripper arm pair (11) and the gripping section (17) of the directly adjacent second gripper arm pair (12) is at least 1.5 times, particularly at least 1.75 times, particularly at least 2 times greater than between the gripping sections (17) of the first and second gripper arm pair (12, 13).

3. The gripper device (10) according to claim 1 or 2,
**characterized in that**
each gripper arm pair (11, 12, 13) comprises a dedicated actuating section (18) for the respective gripping section (17).

4. The gripper device (10) according to claim 3,
**characterized in that**
the actuating sections (18) of the individual gripper arm pairs (11, 12, 13) cooperate with the common actuating means, particularly a camshaft (30), such that the gripper arm pairs (11, 12, 13) can be brought from the gripping position into the open position, particularly at different times or simultaneously.

5. The gripper device (10) according to claim 3 or 4,
**characterized in that**
the actuating sections (18) of the gripper arm pairs (11, 12, 13) are each at the same respective distance to one another.

6. The gripper device (10) according to any one of claims 3 to 5,
**characterized in that**
the gripping sections (17) are arranged at a parallel displacement to the respectively associated actuating section (18), wherein a parallel distance between the gripping section (17) and the actuating section (18) of the third gripper arm pair (11) is greater than as between the gripping section (17) and the actuating section (18) of the first or second gripper arm pair (12, 13).

7. The gripper device (10) according to any one of claims 3 to 6,
**characterized in that**
an angular offset piece (15) is arranged between the gripping section (17) and the actuating section (18), wherein the angular offset piece (15) of the third gripper arm pair (11) is longer than the angular offset piece (15) of either of the other gripper arm pairs (12, 13).

8. A transport device for bottles, cans or other similar liquid containers comprising a gripper device (10) in accordance with any one of the preceding claims.

## Revendications

1. Dispositif de préhension (10) pour saisir et maintenir des bouteilles, comprenant deux paires de bras de préhension (12, 13) c'est-à-dire une première et une seconde paire de bras de préhension écartées l'une de l'autre, destinées à saisir et à maintenir un corps de bouteille, dans lequel la première et la seconde paire de bras de préhension (12, 13) peuvent être transférées par un moyen d'actionnement commun depuis une position de préhension jusque dans une position de libération,
**caractérisé par**
une troisième paire de bras de préhension (11), déplaçable par le moyen d'actionnement commun, destinée à saisir et à maintenir un goulot de bouteille, dans lequel une portion de préhension de la troisième paire de bras de préhension (11) présente vis-à-vis d'une portion de préhension de la seconde paire de bras de préhension (12) immédiatement voisine une distance qui est plus grande que la distance entre une portion de préhension de la première paire de bras de préhension (13) et la portion de préhension de la seconde paire de bras de préhension (12).

2. Dispositif de préhension (10) selon la revendication 1,
**caractérisé en ce que** la distance entre la portion de préhension (17) de la troisième paire de bras de préhension (11) et la portion de préhension (17) de la seconde paire de bras de préhension (12) immédiatement voisine est plus grande d'au moins 1,5 fois, en particulier d'au moins 1,75 fois, en particulier d'au moins 2 fois, que la distance entre les portions de préhension (17) de la première et de la seconde paire de bras de préhension (12, 13).

3. Dispositif de préhension (10) selon la revendication 1 ou 2,
**caractérisé en ce que** les paires de bras de préhension (11, 12, 13) comprennent chacune une portion d'actionnement (18) associée à la portion de préhension (17).

4. Dispositif de préhension (10) selon la revendication 3,
**caractérisé en ce que** les portions d'actionnement (18) des paires de bras de préhension (11, 12, 13) individuelles coopèrent avec le moyen d'actionnement commun, en particulier un arbre à cames (30), de telle façon que les paires de bras de préhension (11, 12, 13) peuvent être transférées de la position de préhension jusque dans la position ouverte en particulier de manière décalée dans le temps les unes par rapport aux autres ou bien simultanément.

5. Dispositif de préhension (10) selon la revendication 3 ou 4,
**caractérisé en ce que** les portions d'actionnement (18) des paires de bras de préhension (11, 12, 13) présentent respectivement la même distance les unes par rapport aux autres.

6. Dispositif de préhension (10) selon l'une des revendications 3 à 5,
**caractérisé en ce que** les portions de préhension (17) sont agencées parallèlement et en décalage par rapport à la portion d'actionnement respectivement associée (18), de sorte qu'une distance parallèle entre la portion de préhension (17) et la portion d'actionnement (18) de la troisième paire de bras de préhension (11) est plus grande que la distance parallèle entre la portion de préhension (17) et la portion d'actionnement (18) de la première ou de la seconde paire de bras de préhension (12, 13).

7. Dispositif de préhension (10) selon l'une des revendications 3 à 6,
**caractérisé en ce qu'**une pièce de décalage angulaire (15) est agencée entre la portion de préhension (17) et la portion d'actionnement (18), de sorte que la pièce de décalage angulaire (15) de la troisième paire de bras de préhension (11) est plus longue que la pièce de décalage angulaire (15) de l'une des autres paires de bras de préhension (12, 13).

8. Dispositif de transport pour bouteilles, boîtes ou récipients à liquide similaires comprenant un dispositif de préhension (10) selon l'une des revendications précédentes.
